# EUROPÄISCHE PATENTSCHRIFT

(11) **EP 1 136 509 B1**
(45) Veröffentlichungstag und Bekanntmachung des Hinweises auf die Patenterteilung: **18.05.2005**
(21) Anmeldenummer: 01106910.1
(22) Anmeldetag: 20.03.2001
(51) Int. Cl.: C08G 59/18, C09D 163/00

(54) **Härter für Epoxidverbindungen, Verfahren zu ihrer Herstellung und Verwendung**
Epoxy hardening agents, process for preparing them and use
Durcisseurs de résines époxydes, procédé pour leur préparation et utilisation

(30) Priorität: 23.03.2000 DE 10013735
(43) Veröffentlichungstag der Anmeldung: 26.09.2001
(73) Patentinhaber: Bakelite AG, 58642 Iserlohn-Letmathe (DE)
(72) Erfinder: Schrötz, Markus, Dr., 46045 Oberhausen (DE); Fulgraff, Martin, 44623 Herne (DE); Martischewski, Peter, 47441 Moers (DE); Schillgalies, Jürgen, Dr., 47445 Moers (DE); Herzog, Rolf, Dr., 46240 Bottrop (DE)

(56) Entgegenhaltungen:
- WO-A-93/12187
- WO-A-97/31963
- DE-A- 19 751 143
- US-A- 5 032 629
- US-A- 5 959 061

## Beschreibung

Die Erfindung betrifft Härter für Epoxidverbindungen, die in Wasser emulgierbar und/oder löslich sind und die bevorzugt zur Herstellung wäßriger Epoxidharz-Emulsionen bzw. - dispersionen Verwendung finden.

Aus EP-B 0 387 418 sind wasseremulgierbare Härtungsmittel für Epoxidharze bekannt, die bei gutem Eigenschaftsprofil der gehärteten Produkte eine niedrige Viskosität, eine helle Farbe und eine gute Emulgierwirkung haben. Diese Härtungsmittel werden hergestellt durch Umsetzung von Polyalkylenpolyethermonoaminen und/oder -diaminen und/oder -polyaminen mit einem mittleren Molekulargewicht von 148 - 5000, mit Di- und/oder Polyepoxidverbindungen, gegebenenfalls nach Reaktion oder in Abmischung mit Monoepoxidverbindungen, Umsetzung des so erhaltenen epoxidgruppenhaltigen Vorproduktes mit einem primären, oder sekundären Mono- und/oder Di- und/oder Polyamin, wobei das sekundäre Amin mindestens zwei sekundäre Aminogruppen hat und das eingesetzte Amin bzw. Amingemisch in einer solchen Menge verwendet wird, daß die zur Reaktion befähigten Epoxidgruppen zu den am Stickstoff befindlichen Wasserstoffatomen in einem Verhältnis von 1 : 2 bis 1 : 10 stehen. Sie haben aber noch verschiedene Mängel: Aufgrund ihres Gehaltes an freiem Amin neigen sie zur Vergilbung und bilden leicht Carbamate, was sich bei ihrer Anwendung in Beschichtungsmitteln durch eine verschlechterte Zwischenschichthaftung bemerkbar macht. Vor allem aber zeigen sie in der Emulsion mit Wasser und Epoxid-Flüssigharz kein Topfzeitende an. Gerade diese Eigenschaft aber ist sehr wichtig, da sie eine fehlerhafte Anwendung ausschließt.

Diese Topfzeitanzeige ist wie folgt zu verstehen: Eine auf eine Untergrund aufgetragene wäßrige Emulsion trocknet. Dabei bricht die Emulsion und die übriggebliebenen Tröpfchen der nichtwäßrigen Phase, die idealerweise Harz und Härter im richtigen Mischungsverhältnis enthalten, verfilmen, bevor der Film dann chemisch aushärtet. Die Zeitspanne vom Herstellen der Emulsion bis zu dem Zeitpunkt, ab dem aus der Emulsion keine Filme mehr oder in ihren Eigenschaften mangelhafte Filme gebildet werden können, ist die Topfzeit. Diese Topfzeit kann unter Umständen wesentlich kürzer sein als die Verarbeitungszeit, d.h., die Zeit, in der die Emulsion auf einen Untergrund aufgebracht werden kann. Es ist daher vorteilhaft, wenn ein Bindemittelsystem das Ende der Topfzeit anzeigt, indem bereits bei Ende der Topfzeit die Viskosität der Emulsion so stark ansteigt, daß eine Verarbeitung nicht mehr möglich ist.

Wasseremulgierbare Härter für Epoxidharze, die eine Topfzeit-Anzeige haben, sind aus EP-A 0 821 021 bekannt. Es sind dies Reaktionsprodukte von aliphatischen Polyolen mit Epoxidharzen, die anschließend mit Polyaminen umgesetzt werden. Die Reaktion von Polyolen mit Harzen läuft nur bei stark erhöhter Temperatur unter Katalyse ab. Dabei entstehen durch Homopolymerisation des Harzes Produkte mit erhöhter Viskosität und das Harz muß in großem Überschuß eingesetzt werden. Dies verschlechtert die Emulgierbarkeit der entsprechend hergestellten Addukte.

Es ist daher Aufgabe der Erfindung, wasseremulgierbare Härtungsmittel für Epoxidharze zur Verfügung zu stellen, die das gleich gute Eigenschaftsprofil der aus EP-B 0 387 418 bekannten Härtungsmittel haben, die aber das Topfzeitende anzeigen. Es ist weiterhin Aufgabe der Erfindung, derartige Härtungsmittel im wesentlichen frei von niedermolekularen Aminen bereitzustellen, die aber trotzdem nicht dunkel gefärbt sind und die sich somit auch zur Herstellung von weißen Beschichtungen eignen.

Die Lösung der Aufgabe erfolgt durch Härtungsmittel gemäß der Ansprüche 1 bis 6 und durch Verfahren zu ihrer Herstellung gemäß der Ansprüche 7 bis 11. Diese Härtungsmittel eignen sich insbesondere zusammen mit einer oder mehreren Epoxidverbindungen und Wasser sowie gegebenenfalls Füllstoffen und Additiven wie z.B. Pigmenten, Entschäumern oder Entlüftern, zur Herstellung von Lacken, Beschichtungen und Überzügen, sowie als Zusatzmittel für hydraulische Bindemittel. Ferner eignen sich diese Härtungsmittel insbesondere zusammen mit einer oder mehreren Epoxidverbindungen sowie gegebenenfalls Füllstoffen und Additiven wie z.B. Pigmenten, Entschäumern oder Entlüftern zur Herstellung von Dicht- und Klebstoffen sowie von flexiblen Formteilen, Flächengebilden und Laminaten und finden für diese Anwendungszwecke Verwendung gemäß der Ansprüche 12 bis 15.

Da bei der Herstellung der Härter gemäß EP-B 0 387 418 im zweiten Reaktionsschritt nur eine vollständige Umsetzung der Epoxidgruppen mit Aminogruppen und keine Härtungsreaktion gewünscht ist, muß die zweite Umsetzung mit einem molaren Aminüberschuß erfolgen. Folglich enthalten die Härter freie Amine, die zu den anfangs genannten nicht erwünschten Eigenschaften führen.
Es wurde nun gefunden, daß sich diese nicht umgesetzten Amine aus dem Reaktionsgemisch destillativ entfernen lassen, ohne daß dabei die bisher günstigen Eigenschaften des aminfreien Härters verschlechtert werden, sofern für den zweiten Reaktionsschritt Amine eingesetzt wurden, die sich unzersetzt destillieren lassen. Diese Destillation ist technologisch nicht einfach, da das Reaktionsgemisch dabei relativ hoch erhitzt werden muß und zudem bei der Destillation unter Vakuum stark schäumt.
Insbesondere ist es überraschend, daß bei dieser destillativen Abtrennung der Amine nur minimale Verfärbungen des als Destillationsrückstand verbleibenden, im wesentlichen von primären, oder sekundären Mono- und/oder Di- und/oder Polyaminen freien Härters auftreten und daß durch diesen Verfahrensschritt die wichtige Eigenschaft der Topfzeitanzeige erreicht wird.

Dieses Produkt ist aber alleine als Härtungsmittel für wasseremulgierbare Epoxidharz-Systeme nicht geeignet, weil es, bedingt durch den hohen Gehalt an Alkylenoxideinheiten, Beschichtungen bildet, deren Wasserbeständigkeit nicht den Qualitätsanforderungen entspricht. Außerdem ist aus dem selben Grund die Durchhärtung zu stark verzögert und die Filme zeigen zu geringe Endfestigkeiten.
Es wurde gefunden, daß diese Nachteile überwunden werden, wenn die Härtungsmittel außer diesen Umsetzungsprodukten (Komponente a) noch folgende Komponenten enthalten: Aminendständiges Addukt aus einem Epoxidharz und einem Amin wie es in Anspruch 1 charakterisiert ist und das Addukt im wesentlichen frei ist von nicht umgesetzten Aminen (Komponente b) und aminendständiges Addukt aus einem Reaktivverdünner und einem primären, oder sekundären Mono- und/oder Di- und/oder Polyamin, wobei das sekundäre Amin mindestens zwei sekundäre Aminogruppen hat und das Addukt im wesentlichen frei ist von nicht umgesetzten Aminen (Komponente c). Diese drei Komponenten a, b und c sind im erfindungsgemäßen Härtungsmittel im Gewichtsverhältnis von 10 bis 60 zu 5 bis 85 zu 5 bis 85 enthalten.

Somit werden durch ein sich der Synthese der Emulgatorkomponente a anschließendes Abdestillieren der überschüsssigen, nicht umgesetzten Mono-, Di- oder Polyamine und durch Kombination mit mindestens zwei verschiedenen, ebenfalls durch Destillieren von nicht umgesetzten Mono-, Di- oder Polyaminen befreiten Epoxid-Amin-Addukten Härter mit einem wesentlich verbesserten Eigenschaftsspektrum erhalten:
Es sind in ihrer wäßrigen Emulsion mit Epoxid-Flüssigharzen alkalibeständige Härter, mit einer niedrigen Viskosität, einer hellen Eigenfarbe und einem geringen toxischen Potential, die nicht zur Carbamatbildung neigen, die sich in Wasser einfach, mit baustellengerechten Werkzeugen emulgieren lassen und die in Abmischung mit den entsprechenden stöchiometrischen Mengen an Epoxidharzen und gegebenenfalls reaktiven Verdünnern und Wasser, bevorzugt bei einem Wassergehalt von 40 -60 %, bezogen auf die organische Substanz, auch bei tiefen Temperaturen schnell aushärten, wobei die entsprechenden Emulsionen ein klar erkennbares Topfzeitende aufweisen und die gehärteten Beschichtungen wasserfest, glänzend und vergilbungsarm sind.

Die Härtungsmittel zeigen eine sehr hohe Reaktivität mit entsprechend kurzen Topfzeiten. Sie sind daher nur geeignet zum Einsatz in maschinellen Verarbeitungsverfahren, bei denen kurze Verarbeitungszeiten erlaubt oder gar erwünscht sind. Für manuelle Verarbeitungsverfahren muß die Reaktivität der Härtungsmittel entsprechend vermindert werden. Dies wird erreicht, indem die Härtungsmittel noch mit bis zu 50 mol%, bezogen auf die Aminogruppen, Reaktivverdünnern umgesetzt sind.

Weiterhin wurde gefunden, daß, wenn bei der Herstellung von Härtungsmitteln analog zu den aus EP-B 0 387 418 bekannten bei der ersten Umsetzung als Polyalkylenpolyetheramine sowohl Polyalkylenpolyethermonoamine und/oder -diamine und/oder -polyamine auf Basis von Ethylenoxid (Polyethylenpolyetheramine) als auch Polyalkylenpolyethermonoamine und/oder -diamine und/oder -polyamine auf Basis von Propylenoxid (Polypropylenpolyetheramine) und/oder Polyalkylenpolyethermonoamine und/oder -diamine und/oder -polyamine auf Basis von Butylenoxid (Polybutylenpolyetheramine) eingesetzt werden, die resultierenden Härtungsmittel in Emulsionen mit Epoxidharzen, insbesondere in gefüllten Systemen, nach der Härtung einen wesentlich verbesserten Glanz haben. Es ist dabei gleichgültig, ob diese Polybutylenpolyether-, Polypropylenpolyether- und/oder Polyethylenpolyetheramine nacheinander mit den Epoxidverbindungen umgesetzt werden, oder ob sie vorher miteinander gemischt werden.

Die Umsetzung mit den Di- und/oder Polyepoxidverbindungen, die auch gegebenenfalls nach Reaktion oder in Abmischung mit Monoepoxiden erfolgen kann, wird mit dem aus EP-B 0 387 418 bekannten Verfahren durchgeführt - in der Regel durch Umsetzung der Reaktionspartner miteinander bei Temperaturen im Bereich von 20 - 120°C, bevorzugt im Bereich von 50 - 90°C und halten des Reaktionsgemisches für etwa 1 - 5 h bei einer Temperatur in diesem Bereich. Anschließend erfolgt eine destillative Abtrennung der im 2. Reaktionsschritt nicht umgesetzten Amine.

Das mengenmäßige Verhältnis der Summe der Polyalkylenetheramine zu den Di- und/oder Polyepoxidverbindungen wird so gewählt, daß die entstehenden Produkte mindestens eine freie Epoxidgruppe pro Molekül enthalten, d. h. die Menge an Epoxidverbindungen mit mehr als einer Epoxidgruppe pro Molekül wird so gewählt, daß das Verhältnis der, gegebenenfalls nach der Umsetzung mit Monoepoxidverbindungen verbliebenen, an Stickstoff gebundenen Wasserstoffatome, die zur Reaktion mit Epoxidgruppen befähigt sind, zu den Epoxidgruppen von Di- bzw. Polyepoxidverbindungen im Bereich von 1 : 1,4 bis 6 liegt.

Als Aminkomponente für diesen ersten Reaktionsschritt dienen handelsübliche Polyalkylenpolyethermonoamine und/oder -diamine und/oder -polyamine, bevorzugt solche auf der Basis von Ethylenoxid (Polyethylenpolyetheramine) und auf der Basis von Propylenoxid (Polypropylenpolyetheramine). Diese Polyalkylenpolyetheramine haben mittlere Molekulargewichte von 148 bis 5000, vorzugsweise zwischen 400 und 2000. Das mengenmäßige Verhältnis der Polyethylenpolyetheramine zu den Polypropylenpolyetheraminen liegt im Bereich von jeweils 5 : 95 bis 95 : 5. Dem können bis zu 10 % Polybutylenpolyetheramine zugesetzt werden.
Da Polyethylenpolyetheramine hydrophiler sind als Polypropylenpolyetheramine und Polybutylenpolyetheramine, ist es möglich, durch eine gezielte Kombination bei geeignetem Mischungsverhältnis der verschiedenen Polyalkylenpolyetheramine den HLB-Wert der nach Mischen der Komponenten a,b und c sowie gegebenenfalls nach weiterem in Reaktion bringen mit vorzugsweise monofunktionellen Epoxidverbindungen erhaltenen Härtungsmittel so einzustellen, daß bei unterschiedlichen Mengenverhältnissen der Einzelkomponenten über weite Bereiche ein Optimum bezüglich Emulgierbarkeit und Wasserbeständigkeit der ausgehärteten Beschichtung erreicht wird.

Als Epoxidkomponenten für den ersten Reaktionsschritt sowie für die Herstellung der Komponente b dienen vorwiegend Epoxidverbindungen mit mehr als einer Epoxidgruppe je Molekül. Zur Verminderung der Aminfunktionalität der Polyalkylenpolyetheramine können zusätzlich Epoxidverbindungen mit nur einer Epoxidgruppe je Moleküleinheit eingesetzt werden.

Es handelt sich dabei um aliphatische, araliphatische, cycloaliphatische, aromatische bzw. heteroaromatenenthaltende Verbindungen mit einer Epoxidgruppe je Molekül. Diese Produkte werden als sog. Reaktivverdünner bezeichnet.

Beispiele hierfür sind Butyl-, Hexyl-, Phenyl-, Butylphenyl- oder Kresylglycidylether. Einsetzbar sind aber auch andere Mono-Glycidylverbindungen wie Glycidylester, -amine, -thioether, -amide, -(iso)cyanate, Aralkylenoxide und glycidylierte Fettalkohole.

Aus der großen Zahl der polyfunktionellen Epoxidverbindungen, die mehr als eine 1,2-Epoxidgruppe im Molekül enthalten, seien genannt: Die Epoxide mehrfach-ungesättigter Kohlenwasserstoffe (Vinylcyclohexen, Dicyclopentadien, Cyclohexadien, Cyclododecadien, Cyclododecatrien, Isopren, 1,5-Hexadien, Butadien, Polybutadiene, Divinylbenzole und dergleichen), Oligomere des Epichlorhydrins und ähnliche, Epoxidether mehrwertiger Alkohole (Ethylen-, Propylen- und Butylenglykole, Polyglykole, Thiodiglykole, Glycerin, Trimethylolpropan, Pentaerythrit, Sorbit, Polyvinylalkohol, Polyallylalkohol und ähnliche), Epoxidether mehrwertiger Phenole (Rescorcin, Hydrochinon, Bis-(4-hydroxyphenyl)-methan, Bis-(4-hydroxy-3-methylphenyl)-methan, Bis-(4-hydroxy-3,5-dibromphenyl)methan, Bis-(4-hydroxy-3,5-difluorphenyl)-methan, 1,1-Bis-(4-hydroxyphenyl)-ethan, 2,2-Bis-(4-hydroxyphenyl)-propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-diphenylmethan, Bis-(4-hydroxyphenyl)-4'-methylphenylmethan, 1, 1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon sowie deren Hydroxyethylether, Phenol-Formaldehyd-Kondensationsprodukte, wie Phenolalkohole, Phenolaldehydharze und ähnliche, S- und N-haltige Epoxide, (N,N'-Diglycidylanilin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureestern ungesättigter Alkohole hergestellt worden sind, Glycidylestern, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.

Bevorzugte Epoxidverbindungen sind bei Raumtemperatur flüssige und feste Polyphenol-Glycidylether, z. B. die Reaktionsprodukte aus Epichlorhydrin und Bisphenol A oder Bisphenol F. Derartige Epoxidharze haben ein Epoxid-Äquivalent von 160- >700. Die vorstehenden polyfunktionellen Epoxidverbindungen, dieser Ausdruck schließt auch den Begriff Epoxidharz ein, können einzeln oder im Gemisch, gegebenenfalls in Gegenwart von Lösungsmitteln nach dem vorliegenden Verfahren umgesetzt werden. Sie können auch, wie bereits vorstehend erwähnt, in Gemischen mit Monoepoxiden eingesetzt werden.

Als Aminkomponenten für den zweiten Reaktionsschritt sowie für die Herstellung der Komponenten b und c dienen: Ethylendiamin, Diethylentriamin, Triethylentetramin, Tetraethylenpentamin, 1,2-Diaminopropan, 1,3-Diaminopropan, 1,2-, 1,3- und 1,4-Diaminobutan, 3-(2-Aminoethyl)aminopropylamin, N,N'-Bis(3-aminopropyl)ethylendiamin, 1,2-Diaminocyclohexan, 1,3-Diaminocyclohexan, 1,4-Diaminocyclohexan, N-Aminoethylpiperazin, N-Aminopropylpiperazin, N-Aminobutylpiperazin, Phenylendiamine, Xylylendiamine und Isophorondiamin oder Mischungen dieser Amine.
Die Menge des einzusetzenden Amines oder Amingemisches soll so bemessen sein, daß sie mindestens in einem 10%igen molaren Überschuß, bezogen auf die Epoxidgruppen des Vorproduktes, eingesetzt wird. Dieser Überschuß kann aus chemischen Überlegungen unbegrenzt sein. Da aber die überschüssigen Amine wieder abdestilliert werden müssen, ist aus wirtschaftlichen Gründen geboten, den Überschuß zu begrenzen. Im allgemeinen werden die Amine daher in einem 10 bis 100 %igen molaren Überschuß, bezogen auf die Epoxidgruppen des Vorproduktes, eingesetzt.

Der zweite Reaktionsschritt erfolgt in der Weise, daß das Produkt aus dem 1. Reaktionsschritt direkt mit dem gewählten Amin oder Amingemisch vermischt und bei einer Temperatur im Bereich von 20-120 °C, insbesondere im Bereich von 50-90 °C, mehrere Stunden lang (1-5 h) behandelt wird. Danach erfolgt eine destillative Abtrennung der freien, nicht umgestzten Amine, bevorzugt unter Vakuum.

Die Herstellung der aminendständigen Addukte aus einem Epoxidharz und einem Amin erfolgt in an sich bekannter Weise durch Umsetzung der entsprechenden Produkte miteinander. Als Epoxidharz können dabei alle vorgenannten Epoxidverbindungen mit mehr als einer Epoxidgruppe pro Molekül und als Aminkomponente alle vorgenannten Amine verwendet werden, die unzersetzt destilliert werden können. Auch hier werden die Amine mindestens in einem 10%igen molaren Überschuß, bezogen auf die Epoxidgruppen der verwendeten Epoxidharze, eingesetzt. Dieser Überschuß kann aus chemischen Überlegungen unbegrenzt sein. Da aber die überschüssigen Amine wieder abdestilliert werden müssen, ist aus wirtschaftlichen Gründen geboten, den Überschuß zu begrenzen. Im allgemeinen werden die Amine daher in einem 10 bis 100 %igen molaren Überschuß, bezogen auf die Epoxidgruppen der verwendeten Epoxidharze, eingesetzt.

Auch die Herstellung der aminendständigen Addukte aus einem Reaktivverdünner und einem Amin erfolgt in an sich bekannter Weise durch Umsetzung der entsprechenden Produkte miteinander.
Als Reaktivverdünner können dabei alle vorgenannten Epoxidverbindungen mit einer Epoxidgruppe pro Molekül dienen, wie aliphatische, araliphatische, cycloaliphatische, aromatische bzw. heteroaromatenenthaltende Verbindungen mit einer Epoxidgruppe je Molekül. Beispiele hierfür sind Butyl-, Hexyl-, Phenyl-, Kresyl-, Butylphenyl- oder Nonylphenylglycidylether. Einsetzbar sind aber auch andere Mono-Glycidylverbindungen wie Glycidylester, -amine, -thioether, -amide, -(iso)cyanate und Aralkylenoxide sowie monofunktionell glycidylierte Fettsäuren, glycidylierte Fettalkohole oder auch polyfunktionelle Reaktivverdünner wie Glycidylether basierend auf mehrwertigen Alkoholen wie Butandiol, Hexandiol, Pentaerythrit oder Trimethylolpropan.
Auch hier werden die Amine mindestens in einem 10%igen molaren Überschuß, bezogen auf die Epoxidgruppen der verwendeten Epoxidharze, eingesetzt. Dieser Überschuß kann aus chemischen Überlegungen unbegrenzt sein. Da aber die überschüssigen Amine wieder abdestilliert werden müssen, ist aus wirtschaftlichen Gründen geboten, den Überschuß zu begrenzen. Im allgemeinen werden die Amine daher in einem 10 bis 100 %igen molaren Überschuß, bezogen auf die Epoxidgruppen der verwendeten Epoxidharze, eingesetzt.

Die erfindungsgemäßen Härter-Komponenten a, b und c können jeweils separat hergestellt und nach Fertigstellung jeweils zur endgültigen Härterformulierung miteinander vermischt werden. Die erfindungsgemäßen Härtungsmittel können aber auch so hergestellt werden, daß die Komponenten a, b und c mit jeweils ihren Anteilen an überschüssigem Amin miteinander vermischt werden und danach die nicht umgesetzten Mono-, Di- oder Polyamine aus dem Gemisch destillativ abgetrennt werden. Sofern für a und b die selbe Epoxidverbindung eingesetzt wird, kann diese zu Beginn in ihrer gesamten Menge vorgelegt werden.

Eine weitere Vereinfachung der Herstellung der erfindungsgemäßen Härtungsmittel kann dadurch erreicht werden, daß nach der Herstellung des Vorproduktes der Komponente a die Epoxidharze für die Komponente b und die Reaktivverdünner für die Komponente c dem Vorprodukt und der Summe aller einzusetzenden Mono-, Di- und/oder Polyamine zugegeben werden und sowohl die letzte Umsetzung als auch die destillative Aufarbeitung aller drei Komponenten gemeinsam erfolgt.

Die erfindungsgemäß hergestellten aminendständigen Härtungsmittel, die als Emulsion oder Lösung vorliegen, werden, gegebenenfalls mit zusätzlichen reaktiven Härterkomponenten, handelsüblichen Zusatzmitteln wie z. B. Füllstoffen, Pigmenten, Verlaufsmitteln, Entschäumern, Entlüftungsmitteln etc., sowie weiteren als Zusatzmittel für Härtungsmittel für Epoxidharze bekannten Stoffen wie z. B. Lösungsmitteln, Beschleunigern etc. mit Epoxidverbindungen, insbesondere Epoxidharzen mit mindestens zwei Epoxidgruppen pro Moleküleinheit in äquimolarem Verhältnis von Amino- und Epoxidgruppen vermischt und gegebenenfalls nach Zufügen von Wasser unter intensivem Rühren dispergiert oder emulgiert, als Emulsion oder Dispersion appliziert und zur Aushärtung gebracht.

Die Aushärtung erfolgt je nach den Erfordernissen bei niedrigen Temperaturen bis herab zu ca. 0 °C innerhalb 3 bis 72 Stunden nach dem Vermischen oder bei erhöhten Temperaturen.

Die so hergestellten Härtungsmittel werden danach, sofern ihr Einsatz in wasseremulgierbaren Systemen gewünscht ist, mit Wasser verdünnt. Gegebenenfalls gibt man noch eine Menge an monofunktionellen Reaktivverdünnern zu, um die Reaktivität des Systems durch Blockieren von primären Aminogruppen einzustellen. Die Menge richtet sich nach der gewünschten Reaktivität (Topfzeit) und nach dem angestrebten HLB-Wert des Härtungsmittels. Dann wird nochmals mit Wasser verdünnt, so daß eine Emulsion und/oder Lösung mit einem Wassergehalt von vorzugsweise 40% erhalten wird. Derartige Emulsionen eignen sich insbesondere für die Herstellung von Versiegelungen oder Grundierungen sowie für dekorative Schlußanstriche auf Epoxidharzbasis.

Dem erfindungsgemäßen Härtungsmittel können weitere an sich bekannte Epoxidharzhärter, insbesondere aminendständige Polyalkylether, primäre längerkettige Monoamine oder aminendständige Butadien-Acrylnitril-Copolymerisate sowie Metallkomplexverbindungen zugegeben werden. Auch diese Härtermischungen sind in der Regel in Wasser emulgierbar.

Die erfindungsgemäßen Härtungsmittel und sie enthaltende Härtermischungen können darüberhinaus in an sich bekannter Weise mit zusätzlichen üblichen Additiven, Beschleunigern, Reaktionsverzögerern kombiniert werden. Auch derartige Härtermischungen können in Wasser emulgiert werden.

### Beispiele

Die Mengenangaben in den Beispielen sind jeweils Angaben in Gewichtsteilen.
Die Abkürzung RT bedeutet Raumtemperatur.
Die Abkürzung Äq. bedeutet Äquivalent.

### Beispiel 1

### Herstellung der Emulgator-Komponente

Unter intensivem Rühren werden zu 130 Teilen eines auf 100°C vorgeheizten Bisphenol-F-Diglycidylethers mit einem Epoxidäquivalent von 172 g/Äq. (Rütapox® 0161) innerhalb von 2 h 94 Teile Polyalkylenpolyethermonoamin auf Basis Ethylenoxid mit einem mittleren Molekulargewicht von 1000 (Jeffamine® M-1000) und 57 Teile Polyalkylenpolyethermonoamin auf Basis Propylenoxid mit einem mittleren Molekulargewicht von 600 (Jeffamine® M-600) (molares Verhältnis Epoxid : Amin von 2:1) zugegeben. Nach einer Reaktionszeit von 2 h bei 100°C wird dieses Vorprodukt unter Stickstoffatmosphäre und unter intensivem Rühren innerhalb von 2 h in 110 Teile Triethylentetramin gegeben und 2 h lang bei 80°C umgesetzt (Verhältnis Epoxid : Amin: 1:2 mol bzw. 1:12 Äquivalente). Danach wird das Reaktionsgemisch unter Vakuum langsam auf 250°C erhitzt und das nicht umgesetzte Triethylentetramin abdestilliert. Erhalten wird ein Produkt mit einer Viskosität bei 25°C von 30000mPas, einem Aminäquivalent von 179 g/Äq. und einer Gardener-Farbzahl <3.

### Beispiel 2

### Herstellung des Epoxidharz-Adduktes

Zu 145 Teilen Triethylentetramin (TETA) werden innerhalb von 2 h bei 80°C 85,2 Teile Bisphenol-F-Diglycidylether mit einem Epoxidäquivalent von 172 (Rütapox® 0161) zugegeben (Verhältnis Epoxy: Amin: 1:2 mol bzw 1:12 Äquivalente). Die Nachreaktion beträgt 2 h bei 80°C. Anschließend erfolgt die Destillation des Aminüberschusses bei 250°C und 50 mbar.
Das erhaltene Endprodukt hat eine Viskosität bei 80°C von 10000 mPas, ein Aminäquivalent von 64 g/Äq. und eine Farbzahl nach Gardner von <3.

### Beispiel 3

### Herstellung des Reaktivverdünner-Adduktes

Analog zu Beispiel 2 werden 84,7 Teile Phenylglycidylether und 122,4 Teile para-t-Butylphenylglycidylether mit 320 Teilen TETA umgesetzt (Verhältnis Epoxy: Amin: 1:2 mol bzw 1:12 Äquivalente). Die Nachreaktion beträgt 2 h bei 80°C. Anschließend erfolgt die Destillation des Aminüberschusses bei 250°C und 50 mbar.
Das erhaltene Endprodukt hat eine Viskosität bei 25°C von 10000 mPas, ein Aminäquivalent von 68 g/Äq. und eine Farbzahl nach Gardner von <3.

### Beispiel 4

### Formulierung des Härters

Zu einer Mischung aus 336 Teilen Emulgator-Komponente aus Beispiel 1, 367,5 Teilen Addukt aus Beispiel 2 und 367,5 Teilen Addukt aus Beispiel 3 werden bei 90°C nacheinander 114 Teile Phenylglycidylether und 75 Teile p-tert.Butylphenylglycidylether gegeben. Nach einer Reaktionszeit von 2 h bei 90°C werden 700 Teile dest. Wasser zugegeben.
Das erhaltene Härtungsmittel hat eine Viskosität bei 25°C von 5000 mPas, ein Aminäquivalent von 200 g/Äq. und eine Farbzahl nach Gardner <3.

### Beispiel 5

### Herstellung und Applikation einer gebrauchsfertigen Emulsion

Nach Abmischung von 32 Teilen des Härtungsmittels mit 31 Teilen eines reaktivverdünnten, flüssigen Epoxidharzes (Basis Bisphenol A, Epoxidäquivalent 190 g/Äq.) und 37 Teilen Wasser hat diese Mischung bei Raumtemperatur eine Topfzeit von etwa 120 min. Beim Auftrag einer dünnen Schicht dieser Emulsion auf eine Unterlage erfolgt eine rasche Filmbildung. Das Ende der Topfzeit ist durch starken Viskositätsanstieg deutlich zu erkennen. Der ausgehärtete Film zeigt einen strahlenden Glanz (175 % bei 20° Meßwinkel). Die Pendelhärte (nach König) beträgt nach 24 h bei RT 100 s und nach 7 d bei RT 200 s.

## Patentansprüche

1. Härtungsmittel für Epoxidverbindungen auf der Basis von Umsetzungsprodukten von Polyalkylenpolyethermonoaminen und/oder -diaminen und/oder -polyaminen mit Di- und/oder Polyepoxidverbindungen und Umsetzung des so erhaltenen epoxidgruppenhaltigen Vorproduktes mit einem primären, oder sekundären Mono- und/oder Di- und/oder Polyamin, **dadurch gekennzeichnet, daß** das Härtungsmittel **aus** folgenden Komponenten **besteht :**
a. Umsetzungsprodukt von Polyalkylenpolyethermonoaminen und/oder -diaminen und/oder -polyaminen mit einem mittleren Molekulargewicht von 148 - 5000, mit Di- und/oder Polyepoxidverbindungen, gegebenenfalls nach Reaktion oder in Abmischung mit Monoepoxidverbindungen, wobei das Verhältnis der gegebenenfalls nach der Umsetzung mit Monoepoxidverbindungen verbliebenen, an Stickstoff gebundenen Wasserstoffatome, die zur Reaktion mit Epoxidgruppen befähigt sind, zu Epoxidgruppen von Di- bzw. Polyepoxidverbindungen im Bereich von 1 : 1,4 bis 6 liegt, Umsetzung des so erhaltenen epoxidgruppenhaltigen Vorproduktes mit einem primären, oder sekundären Mono- und/oder Di- und/oder Polyamin, wobei das sekundäre Amin mindestens zwei sekundäre Aminogruppen hat und das eingesetzte Amin bzw. Amingemisch in einem mindestens 10 %igen molaren Überschuß, bezogen auf die Epoxidgruppen des Vorproduktes, eingesetzt wird, wobei das Umsetzungsprodukt im wesentlichen frei ist von nicht umgesetzten Aminen,
b. aminendständiges Addukt aus einem Epoxidharz und Ethylendiamin, Diethylentriamin, Triethylentetramin, Tetraethylenpentamin, 1,2-Diaminopropan, 1,3-Diaminopropan, 1,2- , 1,3- und 1,4-Diaminobutan, 3-(2 Aminoethyl)aminopropylamin, N,N'-Bis(3-aminopropyl)ethylendiamin, 1,2-Diaminocyclohexan, 1,3-Diaminocyclohexan, 1,4-Diaminocyclohexan, N-Aminoethylpiperazin, N-Aminopropylpiperazin, N-Aminobutylpiperazin, Phenylendiamine, Xylylendiamine und Isophorondiamin oder Mischungen dieser Amine, das Addukt im wesentlichen frei ist von nicht umgesetzten Aminen
c. aminendständiges Addukt aus einem epoxidgruppenhaltigen Reaktivverdünner und einem primären, oder sekundären Monound/oder Di- und/oder Polyamin, wobei das sekundäre Amin mindestens zwei sekundäre Aminogruppen hat und das Addukt im wesentlichen frei ist von nicht umgesetzten Aminen.

2. Härtungsmittel nach Anspruch 1, **dadurch gekennzeichnet, daß** sie die Komponenten a, b und c im Gewichtsverhältnis von 10 bis 60 zu 5 bis 85 zu 5 bis 85 enthalten..

3. Härtungsmittel nach den Ansprüchen 1 und 2, **dadurch gekennzeichnet, daß** sie noch mit bis zu 50 mol%, bezogen auf die Aminogruppen, Reaktivverdünnern umgesetzt sind

4. Härtungsmittel nach den Ansprüchen 1 bis 3, **dadurch gekennzeichnet, daß** die Polyalkylenpolyetheramine sowohl Polyalkylenpolyethermonoamine und/oder -diamine und/oder -polyamine auf Basis von Ethylenoxid als auch Polyalkylenpolyethermonoamine und/oder -diamine und/oder -polyamine auf Basis von Propylenoxid und/oder Polyalkylenpolyethermonoamine und/oder -diamine und/oder -polyamine auf Basis von Butylenoxid sind.

5. Härtungsmittel nach den Ansprüchen 1 bis 4, **dadurch gekennzeichnet, daß** sie als Emulsion oder Lösung vorliegen.

6. Verwendung des Härtungsmittels nach den Ansprüchen 1 bis 5 im Gemisch mit weiteren üblichen Härtern.

7. Verfahren zur Herstellung der Härtungsmittel nach den Ansprüchen 1 bis 6, **dadurch gekennzeichnet, daß** Polyalkylenpolyethermonoamine und/oder -diamine und/oder -polyamine mit einem mittleren Molekulargewicht von 148 - 5000, mit Di- und/oder Polyepoxidverbindungen, gegebenenfalls nach Reaktion oder in Abmischung mit Monoepoxidverbindungen, zu einem Vorprodukt umgesetzt werden, wobei das Verhältnis der gegebenenfalls nach der Umsetzung mit Monoepoxidverbindungen verbliebenen, an Stickstoff gebundenen Wasserstoffatome, die zur Reaktion mit Epoxidgruppen befähigt sind, zu Epoxidgruppen von Di- bzw. Polyepoxidverbindungen im Bereich von 1 : 1,4 bis 6 liegt, Umsetzung des so erhaltenen epoxidgruppenhaltigen Vorproduktes mit einem primären, oder sekundären Mono- und/oder Di- und/oder Polyamin, wobei das sekundäre Amin mindestens zwei sekundäre Aminogruppen hat und das eingesetzte Amin bzw. Amingemisch in einem mindestens 10 %igen molaren Überschuß, bezogen auf die Epoxidgruppen des Vorproduktes, eingesetzt wird, die nicht umgesetztem Mono-, Di- oder Polyamine nach beendeter Umsetzung destillativ abgetrennt werden und die so hergestellten Umsetzungsprodukte mit aminendständigem Addukt aus einem Epoxidharz und Ethylendiamin, Diethylentriamin, Triethylentetramin, Tetraethylenpentamin, 1,2-Diaminopropan, 1,3-Diaminopropan, 1,2- , 1,3- und 1,4-Diaminobutan, 3-(2-Aminoethyl)aminopropylamin, N,N'-Bis(3-aminopropyl)ethylendiamin, 1,2-Diaminocyclohexan, 1,3 Diaminocyclohexan, 1,4-Diaminocyclohexan, N-Aminoethylpiperazin, N-Aminopropylpiperazin, N-Aminobutylpiperazin, Phenylendiamine, Xylylendiamine und Isophorondiamin oder Mischungen dieser Amine und aminendständigem Addukt aus einem Reaktivverdünner und einem primären, oder sekundären Mono- und/oder Di- und/oder Polyamin vermischt werden.

8. Verfahren zur Herstellung der Härtungsmittel nach den Ansprüchen 1 bis 6, **dadurch gekennzeichnet, daß** Polyalkylenpolyethermonoamine und/oder -diamine und/oder -polyamine mit einem mittleren Molekulargewicht von 148 - 5000, mit Di- und/oder Polyepoxidverbindungen, gegebenenfalls nach Reaktion oder in Abmischung mit Monoepoxidverbindungen, zu einem Vorprodukt umgesetzt werden, wobei das Verhältnis der gegebenenfalls nach der Umsetzung mit Monoepoxidverbindungen verbliebenen, an Stickstoff gebundenen Wasserstoffatome, die zur Reaktion mit Epoxidgruppen befähigt sind, zu Epoxidgruppen von Di- bzw. Polyepoxidverbindungen im Bereich von 1 : 1,4 bis 6 liegt, Umsetzung des so erhaltenen epoxidgruppenhaltigen Vorproduktes mit einem primären, oder sekundären Mono- und/oder Di- und/oder Polyamin, wobei das sekundäre Amin mindestens zwei sekundäre Aminogruppen hat und das eingesetzte Amin bzw. Amingemisch in einem mindestens 10 %igen molaren Überschuß, bezogen auf die Epoxidgruppen des Vorproduktes, eingesetzt wird, die nicht umgesetztem Mono-, Di- oder Polyamine nach beendeter Umsetzung destillativ abgetrennt werden und die so hergestellten Umsetzungsprodukte mit aminendständigem Addukt aus einem Epoxidharz und Ethylendiamin, Diethylentriamin, Triethylentetramin, Tetraethylenpentamin, 1,2-Diaminopropan, 1,3-Diaminopropan, 1,2- , 1,3- und 1,4-Diaminobutan, 3-(2 Aminoethyl)aminopropylamin, N,N'-Bis(3-aminopropyl)ethylendiamin, 1,2-Diaminocyclohexan, 1,3-Diaminocyclohexan, 1,4-Diaminocyclohexan, N-Aminoethylpiperazin, N-Aminopropylpiperazin, N-Aminobutylpiperazin, Phenylendiamine, Xylylendiamine und Isophorondiamin oder Mischungen dieser Amine und aminendständigem Addukt aus einem Reaktivverdünner und einem primären, oder sekundären Mono- und/oder Di- und/oder Polyamin vermischt werden und danach die nicht umgesetztem Mono-, Dioder Polyamine aus dem Gemisch destillativ abgetrennt werden.

9. Verfahren zur Herstellung der Härtungsmittel nach den Ansprüchen 1 bis 6, **dadurch gekennzeichnet, daß** nach der Herstellung des Vorproduktes der Komponente a die Epoxidharze für die Komponente b und die Reaktivverdünner für die Komponente c dem Vorprodukt und der Summe aller einzusetzenden Mono-, Diund/oder Polyamine zugegeben werden und sowohl die letzte Umsetzung als auch die destillative Aufarbeitung aller drei Komponenten gemeinsam erfolgt.

10. Verfahren nach den Ansprüchen 7 bis 9, **dadurch gekennzeichnet, daß** die Härtungsmittel noch mit bis zu 50 mol%, bezogen auf die Aminogruppen, Reaktivverdünnern umgesetzt werden.

11. Verfahren nach den Ansprüchen 7 bis 10, **dadurch gekennzeichnet, daß** als Polyalkylenpolyetheramine sowohl Polyalkylenpolyethermonoamine und/oder -diamine und/oder -polyamine auf Basis von Ethylenoxid als auch Polyalkylenpolyethermonoamine und/oder -diamine und/oder -polyamine auf Basis von Propylenoxid und/oder Polyalkylenpolyethermonoamine und/oder -diamine und/oder -polyamine auf Basis von Butylenoxid eingesetzt werden.

12. Verwendung der Härtungsmittel nach den Ansprüchen 1 bis 6, zusammen mit einer oder mehreren Epoxidverbindungen und Wasser sowie gegebenenfalls Füllstoffen und Additiven wie z.B. Pigmenten, Entschäumern oder Entlüftern, zur Herstellung von Lacken, Beschichtungen und Überzügen.

13. Verwendung der Härtungsmittel bzw. Härtermischungen nach den Ansprüchen 1 bis 6, zusammen mit einer oder mehreren Epoxidverbindungen und Wasser sowie gegebenenfalls Füllstoffen und Additiven wie z.B. Pigmenten, Entschäumern oder Entlüftern, als Zusatzmittel für hydraulische Bindemittel.

14. Verwendung der Härtungsmittel bzw. Härtermischungen nach den Ansprüchen 1 bis 6, zusammen mit einer oder mehreren Epoxidverbindungen sowie gegebenenfalls Füllstoffen und Additiven wie z.B. Pigmenten, Entschäumern oder Entlüftern, zur Herstellung von Dicht- und Klebstoffen.

15. Verwendung der Härtungsmittel bzw. Härtermischungen nach den Ansprüchen 1 bis 6, zusammen mit einer oder mehreren Epoxidverbindungen sowie gegebenenfalls Füllstoffen und Additiven wie z.B. Pigmenten, Entschäumern oder Entlüftern, zur Herstellung von flexiblen Formteilen, Flächengebilden und Laminaten.

## Claims

1. Hardeners for epoxide compounds based on reaction products of polyalkylene polyether monoamines and/or diamines and/or polyamines with diepoxide and/or polyepoxide compounds and reaction of the resultant epoxide-group-containing precursor with a primary or secondary mono- and/or di- and/or polyamine, **characterized in that** the hardener consists of the following components:
a. reaction product of polyalkylene polyether monoamines and/or diamines and/or polyamines having an average molecular weight of 148 - 5000 with diepoxide and/or polyepoxide compounds, optionally after reaction or in a blend with monoepoxide compounds, the ratio of the nitrogen-bonded hydrogen atoms that may remain following the reaction with monoepoxide compounds and are capable of reaction with epoxide groups to epoxide groups of diepoxide and/or polyepoxide compounds being situated in the range 1 : 1.4 to 6, reaction of the resultant epoxide-group-containing precursor with a primary or secondary mono- and/or di- and/or polyamine, the secondary amine having at least two secondary amino groups and the amine or amine mixture employed being used in a molar excess of at least 10%, based on the epoxide groups of the precursor, the reaction product being substantially free from unreacted amines,
b. amine-terminal adduct of an epoxy resin and ethylenediamine, diethylenetriamine, triethylenetetraamine, tetraethylenepentamine, 1,2-diaminopropane, 1,3-diaminopropane, 1,2-, 1,3- and 1,4-diaminobutane, 3-(2-aminoethyl)aminopropylamine, N,N'-bis(3-aminopropyl)ethylenediamine, 1,2-diaminocyclohexane, 1,3-diaminocyclohexane, 1,4-diaminocyclohexane, N-aminoethylpiperazine, N-aminopropylpiperazine, N-aminobutylpiperazine, phenylenediamines, xylylenediamines and isophoronediamine or mixtures of these amines, and the adduct is substantially free from unreacted amines,
c. amine-terminal adduct of an epoxide-group-containing reactive diluent and a primary or secondary mono- and/or di- and/or polyamine, the secondary amine having at least two secondary amino groups and the adduct being substantially free from unreacted amines.

2. Hardeners according to Claim 1, **characterized in that** they comprise components a, b and c in a weight ratio of 10 to 60 : 5 to 85 : 5 to 85.

3. Hardeners according to Claims 1 and 2, **characterized in that** they are further reacted with up to 50 mol%, based on the amino groups, of reactive diluents.

4. Hardeners according to Claims 1 to 3, **characterized in that** the polyalkylene polyether amines are not only polyalkylene polyether monoamines and/or diamines and/or polyamines based on ethylene oxide but also polyalkylene polyether monoamines and/or diamines and/or polyamines based on propylene oxide and/or polyalkylene polyether monoamines and/or diamines and/or polyamines based on butylene oxide.

5. Hardeners according to Claims 1 to 4, **characterized in that** they are present as an emulsion or solution.

6. Use of the hardener according to Claims 1 to 5 in a mixture with further customary curatives.

7. Process for preparing the hardeners according to Claims 1 to 6, **characterized in that** polyalkylene polyether monoamines and/or diamines and/or polyamines having an average molecular weight of 148 - 5000 are reacted with diepoxide and/or polyepoxide compounds, optionally after reaction or in a blend with monoepoxide compounds, to give a precursor, the ratio of the nitrogen-bonded hydrogen atoms that may remain following the reaction with monoepoxide compounds and are capable of reaction with epoxide groups to epoxide groups of diepoxide and/or polyepoxide compounds being situated in the range 1 : 1.4 to 6, reaction of the resultant epoxide-group-containing precursor with a primary or secondary mono- and/or di- and/or polyamine, the secondary amine having at least two secondary amino groups and the amine or amine mixture employed being used in a molar excess of at least 10%, based on the epoxide groups of the precursor, the unreacted mono-, di- or polyamines are separated off by distillation after the end of the reaction, and the reaction products thus prepared are mixed with amine-terminal adduct of an epoxy resin and ethylenediamine, diethylenetriamine, triethylenetetraamine, tetraethylenepentamine, 1,2-diaminopropane, 1,3-diaminopropane, 1,2-, 1,3- and 1,4-diaminobutane, 3-(2-aminoethyl)aminopropylamine, N,N'-bis(3-aminopropyl)ethylenediamine, 1,2-diaminocyclohexane, 1,3-diaminocyclohexane, 1,4-diaminocyclohexane, N-aminoethylpiperazine, N-aminopropylpiperazine, N-aminobutylpiperazine, phenylenediamines, xylylenediamines and isophoronediamine or mixtures of these amines and amine-terminal adduct comprising a reactive diluent and a primary or secondary mono- and/or di- and/or polyamine.

8. Process for preparing the hardeners according to Claims 1 to 6, **characterized in that** polyalkylene polyether monoamines and/or diamines and/or polyamines having an average molecular weight of 148 - 5000 are reacted with diepoxide and/or polyepoxide compounds, optionally after reaction or in a blend with monoepoxide compounds, to give a precursor, the ratio of the nitrogen-bonded hydrogen atoms that may remain following the reaction with monoepoxide compounds and are capable of reaction with epoxide groups to epoxide groups of diepoxide and/or polyepoxide compounds being situated in the range 1 : 1.4 to 6, reaction of the resultant epoxide-group-containing precursor with a primary or secondary mono- and/or di- and/or polyamine, the secondary amine having at least two secondary amino groups and the amine or amine mixture employed being used in a molar excess of at least 10%, based on the epoxide groups of the precursor, the unreacted mono-, di- or polyamines are separated off by distillation after the end of the reaction, and the reaction products thus prepared are mixed with amine-terminal adduct of an epoxy resin and ethylenediamine, diethylenetriamine, triethylenetetraamine, tetraethylenepentamine, 1,2-diaminopropane, 1,3-diaminopropane, 1,2-, 1,3- and 1,4-diaminobutane, 3-(2-aminoethyl)aminopropylamine, N,N'-bis(3-aminopropyl)ethylenediamine, 1,2-diaminocyclohexane, 1,3-diaminocyclohexane, 1,4-diaminocyclohexane, N-aminoethylpiperazine, N-aminopropylpiperazine, N-aminobutylpiperazine, phenylenediamines, xylylenediamines and isophoronediamine or mixtures of these amines and amine-terminal adduct comprising a reactive diluent and a primary or secondary mono- and/or di- and/or polyamine and thereafter the unreacted mono-, di- or polyamines are separated off from the mixture by distillation.

9. Process for preparing the hardeners according to Claims 1 to 6, **characterized in that** after the preparation of the precursor of component a the epoxy resins for component b and the reactive diluents for component c are added to the precursor and to the sum of all the mono-, di- and/or polyamines to be used and both the last reaction and the distillative work-up of all three components take place jointly.

10. Process according to Claims 7 to 9, **characterized in that** the hardeners are further reacted with up to 50 mol%, based on the amino groups, of reactive diluents.

11. Process according to Claims 7 to 10, **characterized in that** not only polyalkylene polyether monoamines and/or diamines and/or polyamines based on ethylene oxide but also polyalkylene polyether monoamines and/or diamines and/or polyamines based on propylene oxide and/or polyalkylene polyether monoamines and/or diamines and/or polyamines based on butylene oxide are used as polyalkylene poly ether amines.

12. Use of the hardeners according to Claims 1 to 6, together with one or more epoxide compounds and water and also, if desired, fillers and additives such as, for example, pigments, defoamers or devolatilizers for preparing coating materials, coatings and coverings.

13. Use of the hardeners or hardener mixtures according to Claims 1 to 6, together with one or more epoxide compounds and water and also, if desired, fillers and additives such as, for example, pigments, defoamers or devolatilizers as adjuvants for hydraulic binders.

14. Use of the hardeners or hardener mixtures according to Claims 1 to 6, together with one or more epoxide compounds and also, if desired, fillers and additives such as, for example, pigments, defoamers or devolatilizers for preparing sealants and adhesives.

15. Use of the hardeners or hardener mixtures according to Claims 1 to 6, together with one or more epoxide compounds and also, if desired, fillers and additives such as, for example, pigments, defoamers or devolatilizers for preparing flexible moldings, sheet-like structures and laminates.

## Revendications

1. Durcisseur pour composés de type époxyde à base de produits de réaction de polyalkylène-polyéther-monoamines et/ou -diamines et/ou -polyamines avec des di- et/ou polyépoxydes et réaction du précurseur contenant des groupes époxy, ainsi obtenu, avec une mono- et/ou di- et/ou polyamine primaire ou secondaire, **caractérisé en ce que** le durcisseur est constitué des composants suivants :
a. un produit de réaction de polyalkylène-polyéther monoamines et/ou -diamines et/ou -polyamines ayant une masse moléculaire moyenne de 148 - 5 000, avec des di- et/ou polyépoxydes, éventuellement après réaction ou en mélange avec des monoépoxydes, le rapport des atomes d'hydrogène liés à l'azote, éventuellement restant après la réaction avec des monoépoxydes, qui sont aptes à la réaction avec des groupes époxy, aux groupes époxy de di- ou polyépoxydes, étant dans la plage de 1:1,4 à 1:6, réaction du précurseur contenant des groupes époxy, ainsi obtenu, avec une mono- et/ou di- et/ou polyamine primaire ou secondaire, l'amine secondaire comportant au moins deux groupes amino secondaires et l'amine utilisée ou le mélange d'amines utilisé étant utilisé(e) en un excès molaire d'au moins 10 %, par rapport aux groupes époxy du précurseur, le produit de réaction étant essentiellement exempt d'amines n'ayant pas réagi,
b. un adduit à terminaison amino, à base d'une résine époxy et d'éthylènediamine, de diéthylènetriamine, triéthylènetétramine, tétraéthylènepentamine, 1,2-diaminopropane, 1,3-diaminopropane, 1,2-, 1,3- ou 1,4-diaminobutane, 3-(2-aminoéthyl)aminopropylamine, N,N'-bis(3-aminopropyl)éthylènediamine, 1,2-diaminocyclohexane, 1,3-diaminocyclohexane, 1,4-diaminocyclohexane, N-aminoéthylpipérazine, N-aminopropylpipérazine, N-aminobutylpipérazine, phénylènediamines, xylylènediamines et isophoronediamine ou de mélanges de ces amines, et l'adduit étant essentiellement exempt d'amines n'ayant pas réagi,
c. un adduit à terminaison amino, à base d'un diluant réactif contenant des groupes époxy et d'une mono- et/ou di- et/ou polyamine primaire ou secondaire, l'amine secondaire comportant au moins deux groupes amino secondaires et l'adduit étant essentiellement exempt d'amines n'ayant pas réagi.

2. Durcisseurs selon la revendication 1, **caractérisés en ce qu'**ils contiennent les composants a, b et c en un rapport pondéral de 10 à 60:5 à 85:5 à 85.

3. Durcisseurs selon les revendications 1 et 2, **caractérisés en ce qu'**ils ont réagi encore avec jusqu'à 50 % en moles, par rapport aux groupes amino, de diluants réactifs.

4. Durcisseurs selon les revendications 1 à 3, **caractérisés en ce que** les polyalkylènepolyétheramines sont aussi bien des polyalkylènepolyéthermonoamines et/ou -diamines et/ou -polyamines à base d'oxyde d'éthylène que des polyalkylènepolyéthermonoamines et/ou -diamines et/ou -polyamines à base d'oxyde de propylène et/ou des polyalkylènepolyéthermonoamines et/ou -diamines et/ou -polyamines à base d'oxyde de butylène.

5. Durcisseurs selon les revendications 1 à 4, **caractérisés en ce qu'**ils sont présents sous forme d'émulsion ou de solution.

6. Utilisation du durcisseur selon les revendications 1 à 5, en mélange avec d'autres durcisseurs usuels.

7. Procédé pour la préparation des durcisseurs selon les revendications 1 à 6, **caractérisé en ce qu'**on fait réagir des polyalkylènepolyéthermonoamines et/ou -diamines et/ou -polyamines ayant une masse moléculaire moyenne de 148 - 5 000, avec des di- et/ou polyépoxydes, éventuellement après réaction ou en mélange avec des monoépoxydes, pour obtenir un précurseur, le rapport des atomes d'hydrogène liés à l'azote, éventuellement restant après la réaction avec des monoépoxydes, qui sont aptes à la réaction avec des groupes époxy, aux groupes époxy de di- ou polyépoxydes, étant dans la plage de 1:1,4 à 1:6, on fait réagir le précurseur obtenu, contenant des groupes époxy, avec une mono- et/ou di- et/ou polyamine primaire ou secondaire, l'amine secondaire comportant au moins deux groupes amino secondaires et l'amine utilisée ou le mélange d'amines utilisé étant utilisé(e) en un excès molaire d'au moins 10 %, par rapport aux groupes époxy du précurseur, une fois la réaction terminée on sépare par distillation les mono-, di- ou polyamines n'ayant pas réagi, et on mélange les produits de réaction ainsi obtenus avec un adduit à terminaison amino, à base d'une résine époxy et d'éthylènediamine, de diéthylènetriamine, triéthylènetétramine, tétraéthylènepentamine, 1,2-diaminopropane, 1,3-diaminopropane, 1,2-, 1,3- ou 1,4-diaminobutane, 3-(2-aminoéthyl)aminopropylamine, N,N'-bis(3-aminopropyl)éthylènediamine, 1,2-diaminocyclohexane, 1,3-diaminocyclohexane, 1,4-diaminocyclohexane, N-aminoéthylpipérazine, N-aminopropylpipérazine, N-aminobutylpipérazine, phénylènediamines, xylylènediamines et isophoronediamine ou de mélanges de ces amines et un adduit à terminaison amino, à base d'un diluant réactif et d'une mono- et/ou di- et/ou polyamine primaire ou secondaire.

8. Procédé pour la préparation des durcisseurs selon les revendications 1 à 6, **caractérisé en ce qu'**on fait réagir des polyalkylènepolyéthermonoamines et/ou -diamines et/ou -polyamines ayant une masse moléculaire moyenne de 148 - 5 000, avec des di- et/ou polyépoxydes, éventuellement après réaction ou en mélange avec des monoépoxydes, pour obtenir un précurseur, le rapport des atomes d'hydrogène liés à l'azote, éventuellement restant après la réaction avec des monoépoxydes, qui sont aptes à la réaction avec des groupes époxy, aux groupes époxy de di- ou polyépoxydes, étant dans la plage de 1:1,4 à 1:6, on fait réagir le précurseur ainsi obtenu, contenant des groupes époxy, avec une mono- et/ou di- et/ou polyamine primaire ou secondaire, l'amine secondaire comportant au moins deux groupes amino secondaires et l'amine utilisée ou le mélange d'amines utilisé étant utilisé(e) en un excès molaire d'au moins 10 %, par rapport aux groupes époxy du précurseur, une fois la réaction terminée on sépare par distillation les mono-, di- ou polyamines n'ayant pas réagi, et on mélange les produits de réaction ainsi obtenus avec un adduit à terminaison amino, à base d'une résine époxy et d'éthylènediamine, de diéthylènetriamine, triéthylènetétramine, tétraéthylènepentamine, 1,2-diaminopropane, 1,3-diaminopropane, 1,2-, 1,3- ou 1,4-diaminobutane, 3-(2-aminoéthyl)aminopropylamine, N,N'-bis(3-aminopropyl)éthylènediamine, 1,2-diaminocyclohexane, 1,3-diaminocyclohexane, 1,4-diaminocyclohexane, N-aminoéthylpipérazine, N-aminopropylpipérazine, N-aminobutylpipérazine, phénylènediamines, xylylènediamines et isophoronediamine ou de mélanges de ces amines et un adduit à terminaison amino, à base d'un diluant réactif et d'une mono- et/ou di- et/ou polyamine primaire ou secondaire, et ensuite on sépare du mélange par distillation les mono-, di- ou polyamines n'ayant pas réagi.

9. Procédé pour la préparation des durcisseurs selon les revendications 1 à 6, **caractérisé en ce qu'**après la préparation du précurseur du composant a on ajoute les résines époxy pour le composant b et les diluants réactifs pour le composant c au précurseur et à l'ensemble de toutes les mono-, di- et/ou polyamines à utiliser, et on effectue conjointement aussi bien la dernière réaction que le traitement final par distillation de tous les trois composants.

10. Procédé selon les revendications 7 à 9, **caractérisé en ce que** les durcisseurs sont encore mis en réaction avec jusqu'à 50 % en moles, par rapport aux groupes amino, de diluants réactifs.

11. Procédé selon les revendications 7 à 10, **caractérisé en ce qu'**on utilise en tant que polyalkylènepolyétheramines aussi bien des polyalkylènepolyéthermonoamines et/ou -diamines et/ou -polyamines à base d'oxyde d'éthylène que des polyalkylènepolyéthermonoamines et/ou -diamines et/ou -polyamines à base d'oxyde de propylène et/ou des polyalkylènepolyéthermonoamines et/ou -diamines et/ou -polyamines à base d'oxyde de butylène.

12. Utilisation des durcisseurs selon les revendications 1 à 6, conjointement avec un ou plusieurs composés de type époxyde et de l'eau, ainsi qu'éventuellement des charges et des additifs, comme par exemple des pigments, des antimousses ou des agents de désaération, pour la production de peintures, de compositions de revêtement et de revêtements.

13. Utilisation des durcisseurs ou des mélanges de durcisseurs selon les revendications 1 à 6, conjointement avec un ou plusieurs composés de type époxyde et de l'eau, ainsi qu'éventuellement des charges et des additifs, comme par exemple des pigments, des antimousses ou des agents de désaération, en tant qu'additifs pour des liants hydrauliques.

14. Utilisation des durcisseurs ou des mélanges de durcisseurs selon les revendications 1 à 6, conjointement avec un ou plusieurs composés de type époxyde ainsi qu'éventuellement des charges et des additifs, comme par exemple des pigments, des antimousses ou des agents de désaération, pour la production de matières d'étanchéité et d'adhésifs.

15. Utilisation des durcisseurs ou des mélanges de durcisseurs selon les revendications 1 à 6, conjointement avec un ou plusieurs composés de type époxyde ainsi qu'éventuellement des charges et des additifs, comme par exemple des pigments, des antimousses ou des agents de désaération, pour la fabrication de pièces moulées flexibles, d'articles plats et de stratifiés.
